(19) **Europäisches Patentamt / European Patent Office / Office européen des brevets**

(11) **EP 1 882 331 B1**

(12) **EUROPEAN PATENT SPECIFICATION**

(45) Date of publication and mention
of the grant of the patent:
**25.07.2012   Bulletin 2012/30**

(51) Int Cl.:
***H04L 9/08*** (2006.01)

(21) Application number: **06758567.9**

(22) Date of filing: **25.04.2006**

(86) International application number:
**PCT/US2006/015587**

(87) International publication number:
**WO 2006/124208 (23.11.2006 Gazette 2006/47)**

(54) **MULTI-CHANNEL TRANSMISSION OF QUANTUM INFORMATION**

MEHRKANALÜBERTRAGUNG VON QUANTENINFORMATIONEN

TRANSMISSION MULTI-CANAL D'INFORMATION QUANTIQUE

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **17.05.2005   US 681726 P
24.08.2005   US 210973**

(43) Date of publication of application:
**30.01.2008   Bulletin 2008/05**

(73) Proprietor: **Alcatel Lucent
75007 Paris (FR)**

(72) Inventors:
• **MAROM, Dan Mark**
**NL 07731 (US)**
• **GILES, Randy, Clinton**
**Whippany, New Jersey 07981 (US)**
• **DORRER, Christophe, J.**
**Monmouth
NJ 07747 (US)**
• **DINU, Mihaela**
**NJ 07728 (US)**
• **KANG, Inuk**
**Matawan, New Jersey 07747 (US)**

(74) Representative: **Sarup, David Alexander et al
Alcatel-Lucent Telecom Limited
Unit 18, Core 3, Workzone
Innova Business Park
Electric Avenue
Enfield
EN3 7XU (GB)**

(56) References cited:
**US-A- 5 245 459     US-A- 5 675 648**

• HIRANO T ET AL: "Quantum cryptography using pulsed homodyne detection" PHYSICAL REVIEW A (ATOMIC, MOLECULAR, AND OPTICAL PHYSICS) APS THROUGH AIP USA, vol. 68, no. 4, October 2003 (2003-10), pages 42331-1-42331-7, XP002395274 ISSN: 1050-2947 cited in the application
• JONES D J ET AL: "Carrier-envelope phase control of femtosecond mode-locked laser and direct optical frequency synthesis" SCIENCE, AMERICAN ASSOCIATION FOR THE ADVANCEMENT OF SCIENCE,, US, vol. 288, no. 5466, 28 April 2000 (2000-04-28), pages 635-639, XP002198107 ISSN: 0036-8075 cited in the application
• HOLZWARTH R ET AL: "Optical Clockworks and the Measurement of Laser Frequencies With a Mode-Locked Frequency Comb" IEEE JOURNAL OF QUANTUM ELECTRONICS, IEEE SERVICE CENTER, PISCATAWAY, NJ, US, vol. 37, no. 12, December 2001 (2001-12), XP011052739 ISSN: 0018-9197 cited in the application

EP 1 882 331 B1

**Description**

BACKGROUND OF THE INVENTION

Field of the Invention

The present invention relates to optical communication equipment and, more specifically, to equipment for transmission of encrypted data using quantum cryptography.

Description of the Related Art

Cryptography is often used to exchange messages between two or more nodes (users, stations) in enhanced or even perfect privacy. A typical cryptographic method employs a publicly announced encrypting/decrypting algorithm, with the confidentiality of transmitted information provided by a secret key used in conjunction with that algorithm. Usually, a secret key is a randomly chosen, sufficiently long sequence of bits. For example, in a symmetric ciphering scheme, the transmitting station encrypts information using the secret key and sends the encrypted data over a public channel to the receiving station. The receiving station then uses the same key to undo the encryption and recover the original information.

It is well known that the longer the key, the more secure the system. For example, one widely used encryption system, the Data Encryption Standard (DES), has a key length of 56 bits. No method substantially more efficient than trying all $2^{56}$ possible values of the key is known for breaking the DES. However, it is still possible that, if an eavesdropper has substantial computational power, the DES can be defeated. Therefore, to achieve higher security, a one-time pad (i.e., a key that is as long as the transmitted message) can be used. Although a communication system employing one-time pads is theoretically secure against attacks based on sheer computational power, nevertheless, such a system has to deal with what is known as the key-distribution problem, i.e., the problem of *securely* furnishing keys to the transmitting/ receiving stations.

With conventional (classical) key transmission methods, which can be subject to passive monitoring by an eavesdropper, it is relatively difficult to transmit a certifiably secret key, and cumbersome physical security measures are usually required. However, secure key distribution is possible with quantum techniques. More specifically, in quantum cryptography, a secret key is transmitted through a special quantum channel whose security is based on the principles of quantum mechanics. More specifically, it is known that any measurement of a suitably chosen quantum system inevitably modifies the quantum state of that system. Therefore, when an eavesdropper attempts to get information out of the quantum channel by performing a measurement, the fact that the measurement has been performed can be detected by legitimate users, who will then discard all compromised keys.

In practice, a quantum channel can be established using, e.g., (i) a train of single photons propagating through an optical fiber, with key bits encoded by the photon's polarization or phase, or (ii) a train of coherent optical pulses, each containing a small number (e.g., less than a few hundred) of photons, with key bits encoded by quadrature values of selected variables characterizing each pulse. More details on the establishment and use of representative quantum channels can be found, e.g., in a review article by N. Gisin, G. Ribordy, W. Tittel, and H. Zbinden, entitled "Quantum Cryptography," published in Reviews of Modern Physics, 2002, vol. 74, pp. 145-195 .

Although some progress has been made in developing equipment for quantum channels, this equipment is still not up to the performance targets, e.g., in quantum-key distribution (QKD) rate and transmission distance. For example, a current commercially available QKD system offers a QKD rate of about 1.5 kb/s over a single-mode optical fiber having a length of about 25 km. For comparison, a representative classical communication system offers a data transmission rate of about 10 Gb/s over an optical fiber having a length of about 1000 km. Given these parameters for the QKD and classical systems, one finds that significant improvements in QKD rate and/or transmission distance are desirable.

SUMMARY OF THE INVENTION

Problems in the prior art are addressed, in accordance with the principles of the present invention, by a communication system adapted to use wavelength (frequency) division multiplexing for quantum-key distribution (QKD). In one embodiment, a communication system of the invention has a transmitter coupled to a receiver via a transmission link. The transmitter has (i) a first optical-frequency comb source (OFCS) adapted to generate a first plurality of uniformly spaced frequency components and (ii) a first multi-channel optical modulator adapted to independently modulate each component of the first plurality to produce a quantum-information (QI) signal applied to the transmission link. The receiver has (i) a second OFCS adapted to generate a second plurality of uniformly spaced frequency components and (ii) a second multi-channel optical modulator adapted to independently modulate each component of the second plurality to produce a local-oscillator (LO) signal. Each of the first and second optical-frequency comb sources is independently referenced to a frequency standard (e.g., a Cs atomic clock) such that the frequency components generated by these comb sources have substantially the same frequencies. The receiver employs a multi-channel homodyne detector adapted to process interference signals produced by combining the LO signal with the QI signal to ascertain quantum information carried by the QI signal. Advantageously, a communication system of the invention can be configured to have an aggregate (summed over all channels) QKD rate comparable with Ethernet bit rates.

According to one embodiment, the present invention is a communication system for transmission of quantum information, comprising a transmitter coupled to a receiver via a transmission link, wherein: the transmitter comprises a first optical source coupled to a first optical modulator, wherein the first optical modulator is adapted to modulate light generated by the first optical source to produce a quantum-information (QI) signal applied to the transmission link; and the receiver comprises a second optical source coupled to a second optical modulator, wherein: the second optical modulator is adapted to modulate light generated by the second optical source to produce a local-oscillator (LO) signal; and the LO signal is combined with the QI signal received via the transmission link to ascertain quantum information carried by the QI signal.

According to yet another embodiment, the present invention is a receiver for a communication system for transmission of quantum information, the receiver comprising a second optical source coupled to a second optical modulator, wherein: the second optical modulator is adapted to modulate light generated by the second optical source to produce a local-oscillator (LO) signal; the communication system comprises a transmitter coupled to the receiver via a transmission link; the transmitter comprises a first optical source coupled to a first optical modulator, wherein the first optical modulator is adapted to modulate light generated by the first optical source to produce a quantum-information (QI) signal applied to the transmission link; and the LO signal is combined with the QI signal received via the transmission link by the receiver to ascertain quantum information carried by the QI signal.

BRIEF DESCRIPTION OF THE DRAWING

Other aspects, features, and benefits of the present invention will become more fully apparent from the following detailed description, the appended claims, and the accompanying drawings in which:

Fig. 1 schematically shows a prior-art quantum-key distribution (QKD) system;
Figs. 2A-B graphically illustrate a representative phase-modulation format and the corresponding homodyne detection statistics, respectively, for the QKD system shown in Fig. 1;
Fig. 3 schematically shows a QKD system according to one embodiment of the invention;
Figs. 4A-B graphically illustrate representative characteristics of an optical-frequency comb source (OFCS) that can be used in the QKD system of Fig. 3 according to one embodiment of the invention; and
Fig. 5 graphically shows a method of measuring an offset-frequency for the OFCS illustrated in Fig. 4 according to one embodiment of the invention.

DETAILED DESCRIPTION

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments mutually exclusive of other embodiments.

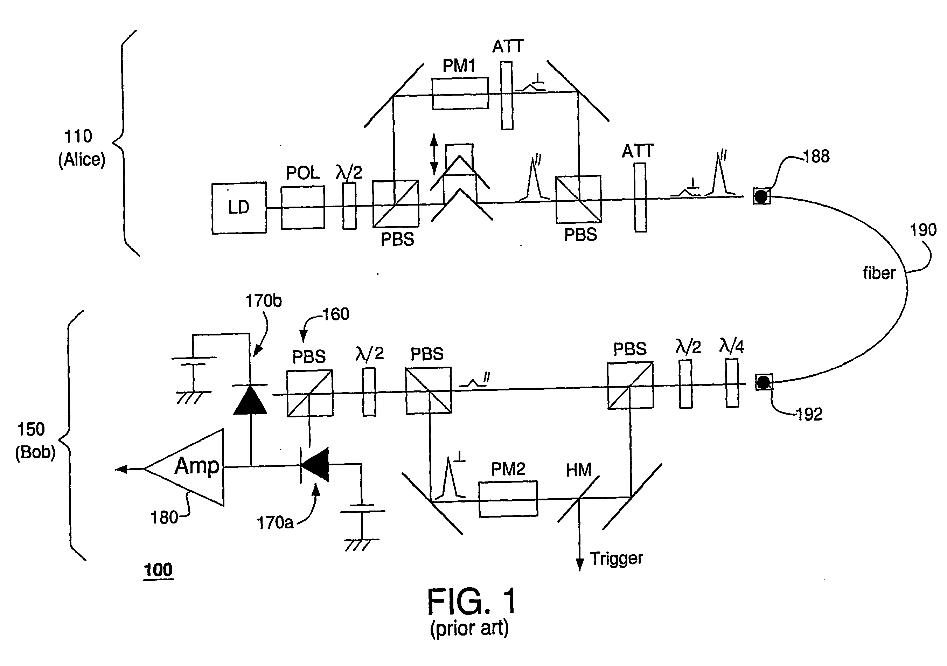

Fig. 1 schematically shows a prior-art quantum-key distribution (QKD) system **100**. More specifically, system **100** has a transmitter **110** (Alice) and a receiver **150** (Bob) coupled via an optical fiber **190**. System **100** is designed to transmit quantum information using phase modulation and homodyne detection. For each quantum bit, transmitter **110** generates two correlated optical pulses (i.e., a relatively weak pulse and a relatively strong pulse) by appropriately splitting an output signal produced by a laser diode (LD). Each weak pulse has a quantum level of intensity suitable for QKD (e.g., a few photons per pulse) and is subjected to phase modulation by a phase modulator PM1. This phase modulation of the weak (quantum) pulse serves two purposes: (1) selection of Alice's basis set for the corresponding quantum bit and (2) encoding of the quantum-bit value. Each strong pulse has a classical level of intensity (e.g., about $10^6$ photons per pulse) and is not phase-modulated in transmitter **110**. The pulses are time-delayed with respect to one another, e.g., as graphically indicated at an input coupler **188** of fiber **190** in Fig. 1, with the weak (quantum) pulse trailing the strong (classical) pulse, and are coupled into the fiber.

After emerging at an output coupler **192** of fiber **190**, the pulses enter receiver **150**, where the time delay between the pulses is reversed and the pulses become temporally aligned. The strong (classical) pulse is subjected to phase modulation by a phase modulator PM2 in receiver **150**, with the phase modulation serving the purpose of selecting Bob's basis set for the measurement of the quantum-bit value carried by the corresponding weak (quantum) pulse. Note that the weak (quantum) pulse is not phase-modulated in receiver **150**. The pulses are spatially combined at a beam splitter **160**, which then splits the resulting optical signal into two (interference) sub-signals and directs each of the sub-signals to a corresponding one of photo-detectors **170a-b**. Each of photo-detectors **170a-b** measures intensity of the received sub-signal and applies the resulting electrical output to a differential amplifier **180**. Amplifier **180** takes a difference of the two outputs, amplifies it, and directs the amplified signal for further processing to a signal processor (not shown).

Together, beam splitter **160**, photo-detectors **170a-b,** and amplifier **180** at receiver **150** implement a homodyne detection scheme. This scheme provides a quadrature measurement for the weak (quantum) pulse (quantum-information signal), from which measurement the quantum-bit value encoded on that pulse can be ascertained. Note that, in this measurement, the strong (classical) pulse acts as a local oscillator (LO). Description of additional hardware elements (e.g., a polarizer (POL), polarizing beam splitters (PBS), attenuators (ATT), a partial mirror (HM), and half- and quarter-wave plates) employed in system **100** and their respective functions can be found in a paper by T. Hirano, et al., Phys. Rev. A, voL 68, p. 42331 (2003) "Quantum cryptography using pulsed homodyne detection" .

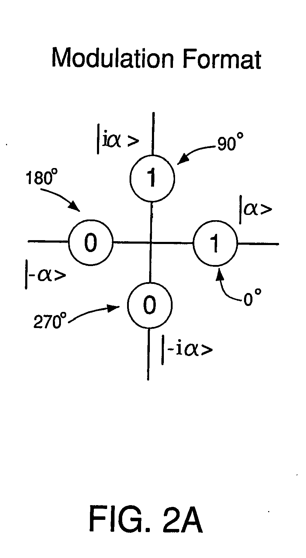

Figs. 2A-B graphically illustrate a representative phase-modulation format and the corresponding homodyne detection statistics, respectively, for system **100**. Referring to Fig. 2A, transmitter **110** (Alice) encodes quantum-bit values onto weak (quantum) pulses by randomly choosing a phase shift for a coherent state $|\alpha\rangle$ from 0, 90, 180, and 270 degrees using phase modulator PM1 (Fig. 1), with the phase shifts of 0 and 90 degrees associated with binary "1" and the phase shifts of 180 and 270 degrees associated with binary "0". Receiver **150** (Bob) randomly chooses a phase shift for phase modulator PM2 (Fig. 1) from 0 and 90 degrees and applies these phase shifts to strong (classical) pulses. As a result, for each pair of (quantum and classical) pulses, system 100 produces a relative phase shift $\phi = \phi_A - \phi_B$, where $\phi_A$ and $\phi_B$ are Alice's and Bob's phase shifts, respectively.

In noiseless classical pulsed homodyne detection (with the term "classical" meaning that both pulses have classical levels of intensity), an amplifier analogous to amplifier **180** of system **100** produces a deterministic output proportional to $2E_S E_{LO} \cos\phi$, where $E_S$ and $E_{LO}$ are the electric fields of the information signal and local oscillator, respectively. Thus, for $\phi$ = 0 and 180 degrees, the amplifier produces an output having a normalized value of 1 and -1, respectively. Similarly, for $\phi$ = 90 or 270 degrees, the amplifier produces an output having a normalized value of zero.

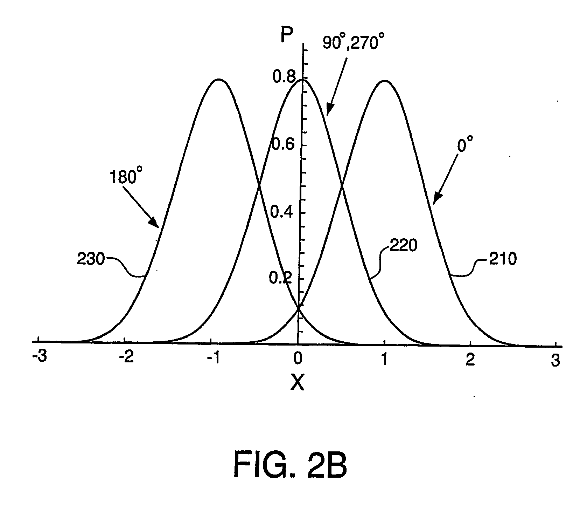

Due to the fact that, in system **100**, the information signal is represented by a weak (quantum) pulse (while the strong (classical) pulse acts as the local oscillator signal), the output of amplifier **180** is not deterministic even in the absence of noise, but rather, is affected by quantum fluctuations that can be described by appropriate probability distribution functions. Fig. 2B graphically shows representative probability distribution functions that describe the output of amplifier **180**, when the average number of photons for the weak (quantum) pulses is 1 photon per pulse. More specifically, in Fig. 2B, the horizontal axis, X, represents a normalized output of amplifier **180**, while the vertical axis, P, represents the probability of that output. Curve **210** is a probability distribution function corresponding to $\phi$ = 0°; curve **220** is a probability distribution function corresponding to $\phi$ = 90 and 270°; and curve **230** is a probability distribution function corresponding to $\phi$ = 180°. Each probability distribution function has a Gaussian shape and is centered at the corresponding classical normalized value.

Note that curve **220** describes the probability distribution functions for both $\phi$ = 90 and 270°. For these relative phase shifts, Bob is unable to ascertain the quantum-bit values encoded by Alice onto the quantum-information signal, because Bob has selected an incorrect basis set, i.e., different from that selected by Alice. However, Bob can differentiate $\phi$ = 0° from $\phi$ = 180° because curves **210** and **230** are different. In that case, both Alice and Bob have selected the same basis set.

Representative signal processing implemented by Bob may include setting up two threshold values, $X_+$ and $X_-$, where $X_- \leq X_+$. If the normalized output, $X_n$, of amplifier **180** is greater than $X_+$, then Bob judges $\phi$ = 0°. If $X_n$ is smaller than $X_-$, then Bob judges $\phi$ = 180°. If $X_n$ is between $X_+$ and $X_-$, then Bob gets an inconclusive result and abandons the judgment. Note that, because curves **210** and **230** have an area of overlap, Bob's judgment is not always true and there exists an intrinsic error probability. This intrinsic error probability reflects the fact that there is a non-zero probability that (i) the true $\alpha$ value is 180° when Bob makes a judgment that $\phi$ = 0° and (ii) the true $\phi$ value is 0° when Bob makes a judgment that $\phi$ =180°.

After an appropriate number of pulses have been transmitted from Alice to Bob, Bob tells Alice, via an authenticated public channel established, e.g., over a conventional telephone or computer network, his basis-set choices, and Alice tells Bob which choices provided the correct basis set for ascertaining the quantum-bit values. Bob then discards the measurement results corresponding to the incorrect basis sets and interprets the remaining measurement results in accordance with the modulation format of Fig. 2A. Finally, Alice and Bob carry out error correction and privacy amplification procedures with the interpreted data to distill a secure quantum key. Additional information on representative error correction and privacy amplification procedures can be found, e.g., in (1) F. Grosshans and P. Grangier, Phys. Rev. Letters, 2002, vol. 88, N. 5, p. 057902; (2) F. Grosshans and P. Grangier, arXiv:quant-ph/0204127 v1, 22 Apr 2002; and (3) M. A. Nielsen and I. L. Chuang, "Quantum Computation and Quantum Information," Cambridge University Press (2000), pp. 582-603.

Referring back to Fig. 1, one important feature of system **100** is that the local oscillator signal (classical pulse) is transported from transmitter **110** along fiber **190** to receiver **150** together with the information signal (quantum pulse). In classical communications, a known alternative to transporting the LO signal from the transmitter to the receiver is to provide a tunable light source at the receiver together with a phase-lock loop (PLL) configured to lock the frequency and phase of the optical signal generated by that light source to those of the information signal. The PLL typically functions by (i) simultaneously measuring the beat frequency and phase offset between the communication (information) signal and the signal generated by the tunable light source and (ii) providing an appropriate feedback to the tunable light source, which forces the light source to keep these parameters within specified bounds. However, in the quantum limit applicable to quantum communications in general and system 100 in particular, a simultaneous measurement of frequency and phase requires a measurement of two non-commuting quadratures (variables), which is prohibited by the fundamental principles of quantum mechanics. As an illustration, a beat-frequency measurement is akin to a measurement of an energy difference ($\Delta E$), and a phase-offset measurement is akin to a measurement of a time interval ($\Delta t$), which measurements are governed by the Heisenberg uncertainty relationship $\Delta E \Delta t \geq \hbar$, where $\hbar$ is the Planck constant. One practical effect of this fundamental uncertainty relationship on system **100** is that, in the quantum limit, simultaneous locking, with suitable accuracy, of the LO frequency and phase is not possible at receiver **150**. Due to this fundamental limitation, system **100** cannot be implemented with a receiver having an independent (second) light source driven by a conventional PLL. As already explained above, system **100** is instead configured to transport the LO signal from transmitter **110** to receiver **150**, with the transported LO signal being phase- and frequency-locked to the quantum-information signal by virtue of originating from the same light source (LD in Fig. 1).

Furthermore, the fact that the local oscillator signal is transported from transmitter **110** to receiver **150** makes system **100** substantially incompatible with multi-channel QKD transmission. For example, suppose that system **100** supports two QKD channels operating at two different wavelengths (frequencies). Then, fiber **190** has to transport strong (classical) LO pulses corresponding to each of those channels. To avoid nonlinear optical interactions in fiber **190**, e.g., between LO pulses corresponding to different QKD channels, these pulses have to be temporally separated at input coupler **188**. However, due to the fact that the speed of light in fiber **190** depends on wavelength, pulses corresponding to different channels propagate along the fiber at different speeds. As a result, even if the pulses are initially temporally separated, due to a relatively large length (e.g., several kilometers or more) of fiber **190**, the faster moving pulse may eventually catch up with a slower moving pulse, which it initially trailed in the fiber. The overlapped pulses then nonlinearly interact as they propagate along fiber **190**, e.g., via four-wave mixing and cross-phase modulation, with the interaction giving rise to a detrimental inter-channel crosstalk. Disadvantageously, this crosstalk may significantly increase the error rate for system **100**, if not completely destroy the system's QKD capability.

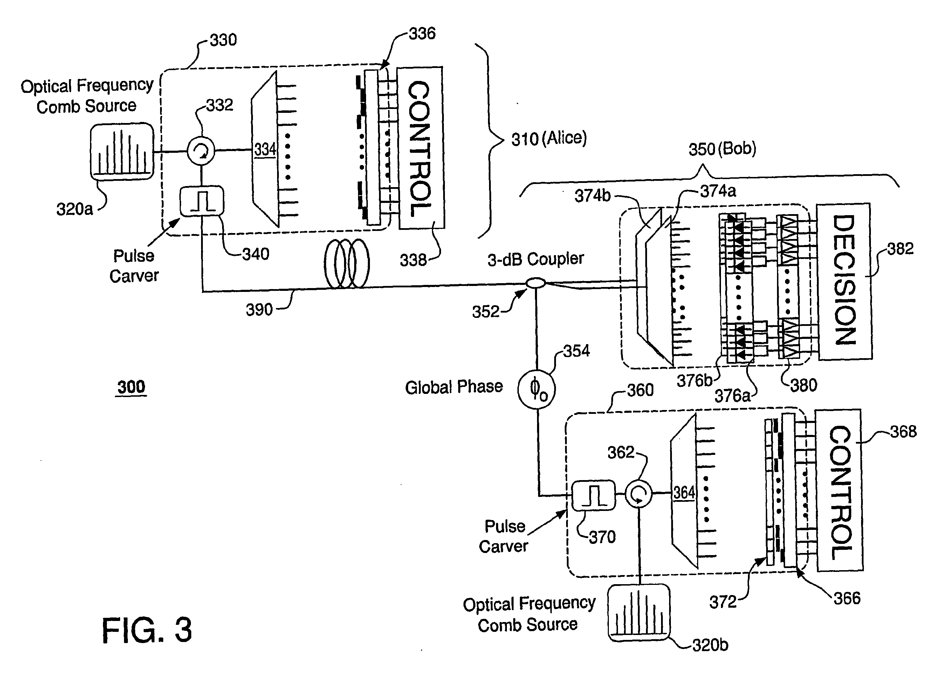

Fig. 3 schematically shows a QKD system **300** according to one embodiment of the invention. More specifically, system **300** has a transmitter **310** (Alice) and a receiver **350** (Bob) coupled via an optical fiber **390**. In one embodiment, system **300** is adapted to transmit quantum information using phase modulation and homodyne detection analogous to those used in system **100** of Fig. 1. However, one difference between systems **100** and **300** is that the former uses the same light source (LD at transmitter **110**) to generate both the quantum-information and LO signals, while the latter is designed to employ two separate light sources, i.e., optical-frequency comb sources **320a-b** located at transmitter **310** and receiver **350**, respectively. More specifically, optical-frequency comb source (OFCS) **320a** is used at transmitter **310** to generate one or more quantum-information signals, which are then frequency multiplexed and coupled into fiber **390**. OFCS **320b** is used at receiver **350** to generate one or more local-oscillator signals, which are then used to implement homodyne detection of the corresponding quantum-information signals received by the receiver via fiber **390** from transmitter **310**. As a result, unlike system **100**, system **300** does not transport a local oscillator signal from Alice to Bob.

System **300** is able to circumvent the (above-explained) fundamental limitations of system **100** because each of optical-frequency comb sources **320a-b** is able to generate optical frequencies with such accuracy that conventional frequency locking of OFCS **320b** to OFCS **320a** is no longer required. For example, in one embodiment, OFCS **320** provides a frequency comb, in which each frequency mode has (i) a width of about 10 kHz or narrower and (ii) a center frequency located within about 100 Hz or less from a designated frequency. Advantageously, these characteristics of OFCS **320** enable system **300** to perform homodyne detection of quantum-information signal(s) at receiver **350** without transporting LO signal(s) from transmitter **310** to the receiver. Furthermore, the fact that the local oscillator is not transported from transmitter **310** to receiver **350** makes system **300** amenable to multi-channel QKD transmission. More specifically, due to a relatively small distance (e.g., less than about 1 m) along which relatively strong LO signals originating at OFCS **320b** in receiver **350** are transported in the same optical fiber, nonlinear optical interactions between those signals in that fiber do not significantly increase the error rate for system **300** compared to that in a single-channel QKD configuration of that system.

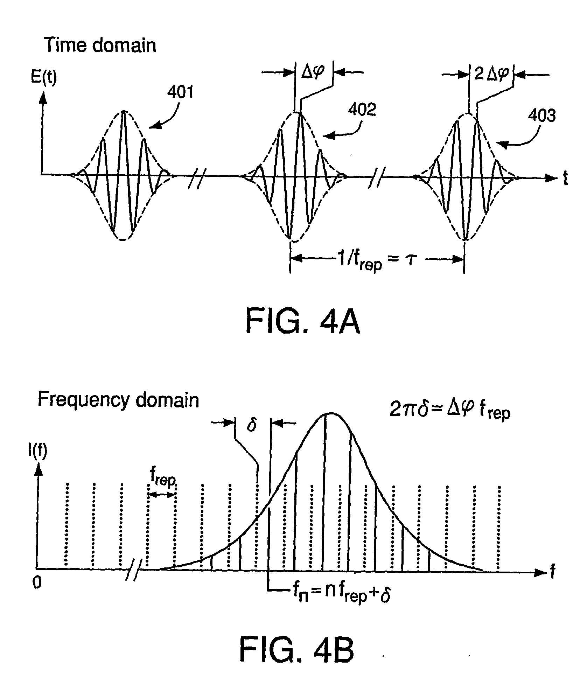

Figs. 4A-B graphically illustrate representative characteristics of OFCS **320** according to one embodiment of the invention. More specifically, in the embodiment illustrated by Fig. 4, OFCS **320** is a mode-locked laser with a controlled carrier-envelope offset (CEO) phase.

Fig. 4A shows a pulse train generated by such a representative mode-locked laser with CEO phase control. More specifically, three consecutive pulses in the train are shown, with the solid lines representing the electric-field carrier wave and the dashed lines representing the corresponding pulse envelopes. The envelope peak-to-peak separation between the pulses ($\tau$) is $1 / f_{rep}$, where $f_{rep}$ is the pulse repetition rate. As can be seen in Fig. 4A, the relative phase between the peak of the pulse envelope and the underlying electric-field carrier wave is not constant and varies from pulse to pulse. For example, for pulse **401**, the peak of the pulse envelope is aligned with a peak of the electric-field carrier, i.e., the relative phase is zero. However, for pulse **402**, the relative phase between the peak of the pulse envelope and the nearest peak of the electric-field carrier has changed to become $\Delta\varphi$; and, for pulse **403**, this relative phase has further incremented by $\Delta\varphi$ to become $2\Delta\varphi$. This pulse-to-pulse phase evolution is primarily due to the fact that the group and phase velocities differ inside the mode-locked laser cavity. However, advantageously, modem femtosecond-laser techniques enable effective control and stabilization of the CEO-phase increment ($\Delta\varphi$) to produce predictable and reproducible phase evolution.

Fig. 4B shows a frequency spectrum corresponding to the pulse train of Fig. 4A. More specifically, the vertical solid lines represent modes of the frequency comb corresponding to the pulse train of Fig. 4A, with the bell-shaped curve indicating the frequency-comb envelope. Note that, in the frequency domain, the output of a CEO-phase-controlled mode-locked laser is substantially equivalent to the combined output of a collection of correlated continuous-wave (CW) lasers, each producing a corresponding frequency mode of the frequency comb. The vertical dotted lines in Fig. 4B show a frequency grid, $nf_{rep}$, where $n$ is a positive integer. As seen in Fig. 4B, the frequency comb generated by the CEO-phase-controlled mode-locked laser is not necessarily aligned with this frequency grid, but in general, is shifted with respect to the grid by an offset frequency, $\delta = \Delta\varphi f_{rep} / 2\pi$, with the individual frequencies ($f_n$) in the frequency comb described by Eq. (1) as follows:

$$f_n = nf_{rep} + \delta \qquad\qquad (1)$$

One consequence of the relationship given by Eq. (1) is that control of the phase increment ($\Delta\varphi$) provides effective means for controlling the absolute values of the optical frequencies in the frequency comb. Additional details on the characteristics of CEO-phase-controlled mode-locked lasers can be found, e.g., in D.J. Jones, et al., Science, vol. 288, p. 635 (2000).

Other embodiments of the invention can use OFCS sources other than CEO-phase-controlled mode-locked lasers, even though the latter can offer the advantages of (i) self-referencing, i.e., the capability of assigning optical comb frequencies without locking to a particular physical optical transition, and (ii) relatively large bandwidth available for QKD due to the octave-spanning spectrum. For example, a mode-locked laser with one component in its frequency comb locked to a reference atomic transition is an acceptable OFCS. Similarly, a monochromatic laser locked to a reference atomic transition, with its output sinusoidally modulated by an optical modulator driven at a relatively high (e.g., radio) frequency, is another acceptable OFCS.

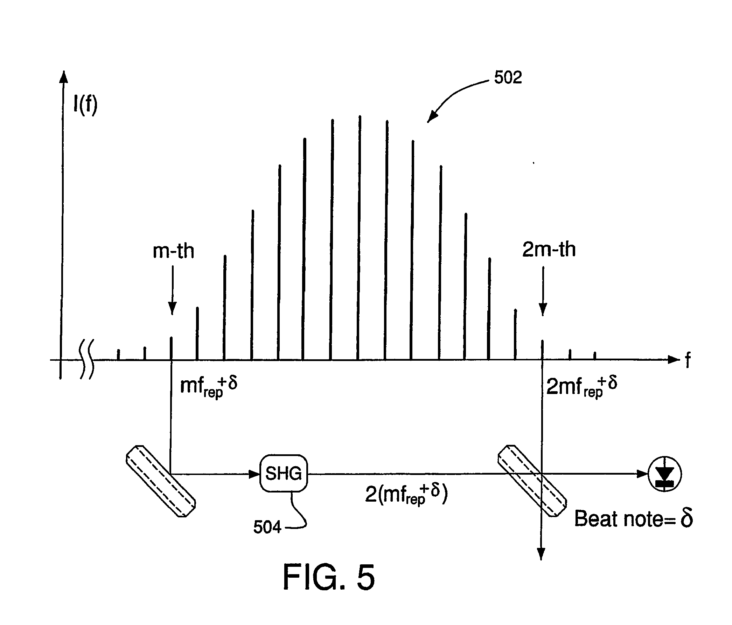

Fig. 5 graphically shows a method of measuring an offset frequency ($\delta$) according to one embodiment of the invention. The method of Fig. 5 is generally applicable to an octave-spanning frequency comb and can be used, for example, to accurately reference and control the output of a corresponding CEO-phase-controlled mode-locked laser. More specifically, according to the method of Fig. 5, light corresponding to an m-th mode (where $m$ is a positive integer) from the low-frequency side of an octave-spanning frequency comb **502** is frequency doubled using a second-harmonic-generating (SHG) element **504**. The resulting second harmonic has a frequency of $f_{SH} = 2f_m = 2mf_{rep} + 2\delta$. The second harmonic is then interfered with the (2$m$)-th mode from the high-frequency side of frequency comb **502**, which mode has a frequency of $f_{2m} = 2mf_{rep} + \delta$. The interference produces a signal (beat note) having a difference frequency $f_{SH} - f_{2m} = \delta$. Thus, the offset frequency for the CEO-phase-controlled mode-locked laser can be monitored by measuring the frequency of the beat note. The value of $\delta$ can be adjusted by configuring the laser to set the group and phase velocities in the laser cavity such that the frequency comb is appropriately positioned with respect to the frequency grid. In one embodiment, the method of Fig. 5 can be used to reference two or more frequency combs **502** generated by different optical-frequency comb sources to an atomic clock to establish, e.g., a frequency alignment accuracy of about 100 Hz or better for optical-frequency comb sources **320a-b** in system **300**. More details, on atomic-clock referencing of CEO-phase-controlled mode-locked lasers can be found, e.g., in R. Holzwarth, et al., IEEE J. Quant. Electron., vol. 37, p. 1493 (2001).

Referring back to Fig. 3, in one embodiment, each of optical-frequency comb sources **320a-b** comprises a CEO-phase-controlled mode-locked laser (not shown) referenced to a selected atomic-clock frequency, e.g., as described above. Transmitter **310** includes a multi-channel phase modulator **330** configured to have a plurality of channels corresponding to a set of frequencies from the frequency comb generated by OFCS **320a**. Modulator **330** has (I) a variable multiplexer/de-multiplexer (MUX/DMUX) **334** configured to receive the output of OFCS **320a** via an optical circulator **332** and (II) a phase shifter **336** optically coupled to the MLTX/DMLJX. One function of MUX/DMUX **334** is to de-multiplex the comb frequencies produced by OFCS **320a** into separate beams and direct these beams to phase shifter **336**.

Another function of MUX/DMUX **334** is to receive the phase-shifted beams back from phase shifter **336**, re-multiplex them, and apply the resulting signal to optical circulator **332**.

In one embodiment, phase shifter **336** includes a MEMS array of movable mirrors, e.g., similar to that disclosed in U.S. Patent No. 6,876,484. More specifically, each mirror in the array can be independently translated based on a control signal provided by a controller **338** to introduce a desired phase shift for the corresponding beam received by the mirror from MUX/DMUX **334**, with the phase shift being proportional to the mirror displacement with respect to a reference position. In a representative configuration, phase shifter **336** is adapted to introduce, for each beam, optical phase shifts corresponding to the modulation format of Fig. 2A. More specifically, based on control signals from controller **338**, phase shifter **336** positions each mirror in the mirror array such that the resulting phase shift is substantially one of 0, 90, 180, and 270 degrees. For each time slot, the phase shift is randomly selected for each beam from these values to encode a corresponding bit value and is kept constant for the time-slot duration, with the phase shifts of 0 and 90 degrees associated with the binary "1" and the phase shifts of 180 and 270 degrees associated with the binary "0". The selected phase shift determines Alice's basis set selection for the corresponding quantum bit.

Note that, in the round trip from optical circulator **332** to the mirror array of phase shifter **336** and back, optical signals corresponding to the comb frequencies go through MUX/DMUX **334** two times. Since MUX/DMUX **334** is a variable MUX/DMUX, it can be configured to attenuate each of the optical signals in the corresponding channel by a desired amount independent of the attenuation introduced in the other channels. As such, MUX/DMUX **334** can provide an additional function of equalizing the optical signals (e.g., transforming the initial bell-shaped frequency-comb envelope produced by OFCS **320a** into a substantially flat shape) and attenuating the light intensity in each channel to a quantum level suitable for QKD transmission. Optical circulator **332** then directs the phase-shifted/attenuated signals received from MUX/DMUX **334** to a pulse carver **340**, which shapes these signals into a pulse train and couples the result into fiber **390**. Pulse carver **340** and phase shifter **336** are appropriately synchronized, e.g., such that the carved-pulse position corresponds to a midpoint of the corresponding time slot. In a representative configuration, the time-slot duration is about 100 ns and each carved pulse has a width of about 10 ps.

The pulse train produced by pulse carver **340** is a frequency (wavelength) multiplexed quantum-information signal having a plurality of components corresponding to the channels of phase modulator **330**. The attenuation introduced in MUX/DMUX **334** is selected such that the number of photons per pulse per component is appropriate for the QKD protocol used in system **300**. For example, for the (well-known in the art) BB84 and B92 protocols, the number of photons is about 1 photon per pulse per component. Alternatively, for a continuous-variable protocol, the number of photons is about several hundred photons per pulse per component.

Receiver **350** includes a multi-channel phase modulator **360** that is substantially analogous to multi-channel phase modulator **330** of transmitter **310**. More specifically, phase modulator **360** has an optical circulator **362**, a MUX/DMUX **364**, a phase shifter **366**, a controller **368**, and a pulse carver **370**, which are analogous to optical circulator **332**, MUX/DMUX **334**, phase shifter **336**, controller **338**, and pulse carver **340**, respectively, of phase modulator **330**. However, one difference between phase modulators **330** and **360** is that the latter additionally has a multi-channel polarization controller **372**. One reason for having polarization controller **372** in phase modulator **360** is that the polarization of the quantum-information signal produced by transmitter **310** may change as the signal propagates in fiber **390**. Polarization controller **372** serves to align the polarization of each LO component originating at OFCS **320b** with that of the corresponding component of the received quantum-information signal.

In one configuration, to determine proper polarization settings for polarization controller **372**, transmitter **310** sends a training signal having a known sequence of quantum bits for each channel. Receiver **350** then uses this training signal to adjust the polarization setting for each channel to properly align the polarization of the LO component with the corresponding quantum-information component. For example, receiver **350** measures quadrature variables of each pulse, while the phase of the LO signal is shifted by 90 degrees from pulse to pulse. If the known sequence of quantum bits has substantially identical pulses, the sum of the squares of the measured quadrature variables of successive pulses,

$$\sqrt{X_i^2 + X_{i+1}^2}$$ , is proportional to the amplitude of the quantum signal whose polarization is parallel to that of the LO field. Each frequency component of the polarization controller **372** can be controlled to rotate the polarization of each frequency component of LO field to be aligned with that of the quantum signal of the corresponding frequency. Once the proper polarizations settings are determined, polarization controller **372** is configured to fix these settings for the duration of a QKD session. This procedure can be repeated as often as necessary to ensure good and proper polarization alignment.

Each LO component produced by OFCS **320b** and phase modulator **360** has a classical level of intensity (e.g., $10^6$ photons per pulse carved by pulse carver **370**). Depending on the optical power generated by OFCS **320b**, amplification of certain or all comb frequencies maybe required in phase modulator **360** (as opposed to attenuation in phase modulator **330**). As such, phase modulator **360** may incorporate one or more optical amplifiers (not shown) and have MUX/DMUX **364** configured to introduce as little attenuation as possible.

When transmitter **310** uses the modulation format shown in Fig. 2A, phase shifter **366** in phase modulator **360** is configured to position each mirror in its mirror array such that the resulting phase shift is substantially one of 0 and 90 degrees. For each time slot, the phase shift is randomly selected for each channel from these two values to provide Bob's basis set selection for ascertaining the bit value carried by the corresponding component of the quantum-information signal in that time slot. As a result, phase modulator **360** outputs a multi-component LO signal suitable for implementing at receiver **350** a homodyne detection scheme substantially similar to that implemented in system **100**, for each component of the quantum-information signal received from transmitter **310**.

As already explained above, the high accuracy of optical frequency generation in optical frequency comb sources **320a-b** makes it unnecessary for system **300** to perform frequency locking of the LO signal to the quantum-information signal. However, phase locking between these signals is still required to enable phase modulator **360** to accurately provide the desired phase shifts of 0 and 90 degrees for the components of the LO signal. The task of phase locking the LO signal to the quantum-information signal is carried out by a global-phase modulator **354** and phase shifter **366**. For example, to phase-lock an LO component to the corresponding component of the quantum-information signal, transmitter **310** sends a training signal having a known sequence of quantum bits for each channel. Receiver **350** then uses this training signal to adjust the mirror positions in phase shifter **366** such that, for each signal component, the relative phase difference between the LO and quantum-information signals is, e.g., 90 degrees.

When system **300** switches from training-sequence transmission to QKD transmission, receiver **350** uses the mirror positions determined during the training sequence as reference positions with respect to which appropriate mirror displacements are generated to produce the phase shifts required for ascertaining the quantum bit values. Global-phase modulator **354** is an optional element that can help maintain the phase lock after the initial phase lock has been achieved with phase shifter **366**. More specifically, since different comb frequencies are all correlated with one another, additional phase variations among the channels that might occur over time are typically also correlated and deterministic. Therefore, these additional phase variations can be compensated by configuring global-phase modulator **354** to introduce an additional (global) phase shift, common for all frequencies (channels).

The quantum-information signal received via fiber **390** from transmitter **310** and the LO signal produced by OFCS **320b** and phase modulator **360** are applied to a 3-dB coupler **352**, which combines these signals and then splits the result into two interference sub-signals. Each of the interference sub-signals is then directed to a corresponding one of demultiplexers **374a-b**, which de-multiplexes the interference sub-signal into individual spectral components. Each pair of the sub-signal components having the same frequency is then used to implement homodyne detection substantially similar to that implemented in receiver **150** of system **100** (Fig. 1). More specifically, receiver **350** has two arrays **376a-b** of photo-detectors coupled to an array **380** of charge-sensitive amplifiers. Photo-detectors receiving the same frequency in arrays **376a-b** are connected to the corresponding amplifier in array **380** via photo-detector terminals having opposite polarity. As a result, the amplifier effectively acts as a differential amplifier configured to amplify a signal difference for the photo-detectors. The amplified difference signal is applied for further processing to a signal processor **382**.

In one configuration, processor **382** processes the difference signal corresponding to each frequency by interpreting that signal, e.g., in accordance with the thresholding method described above in reference to Fig. 2B. After an agreed-upon number of quantum-information transmission time slots, Bob tells Alice, via an authenticated public channel, his choices of the basis sets for each frequency, and Alice tells Bob which choices provided the correct basis sets for ascertaining the quantum-bit values. Bob then discards the measurement results corresponding to the incorrect basis sets and interprets the remaining measurement results in accordance with the modulation format of Fig. 2A. Finally, Alice and Bob carry out error correction and privacy amplification procedures to distill a secure quantum key from the interpreted data.

In one embodiment, system **300** is designed to have the following characteristics: (i) channel (frequency) spacing of about 10 GHz; (ii) a total of 256 channels, which corresponds to about 20-nm spectral bandwidth; (iii) modulation speed of about 10 MHz, which corresponds to a time-slot duration of about 100 ns; (iv) intensity of the quantum-information signal of about 1 pW/channel; and (v) intensity of the LO signal of about 1 mW/channel. When implemented with these parameters, system **300** supports a QKD rate of over 20 Mb/s, which is a significant improvement over that provided by prior-art QKD systems. In another embodiment, in which system **300** utilizes a full octave-spanning optical range (e.g., from 1000 to 2000 nm), with 10-GHz channel spacing, the aggregate QKD rate can reach about 1 Gb/s. Advantageously, this aggregate QKD rate can provide full cryptographic support for a communication system operating at modem Ethernet speeds.

While this invention has been described with reference to illustrative embodiments, this description is not intended to be construed in a limiting sense. For example, instead of having a variable MUX/DMUX **334**, phase modulator **330** can be implemented with a regular MUX/DMUX and a separate multi-channel attenuator coupled to that MUX/DMUX. Alternatively or in addition, phase shifter **336** can be configured to attenuate signal components, e.g., by tilting the mirrors or changing their reflectivity and/or shape. Furthermore, a single MUX/DMUX (e.g., MUX/DMUX **334** or MUX/DMUX **364**) configured to perform both multiplexing and de-multiplexing functions can be replaced by two separate elements, a MUX configured to perform a multiplexing function only and a DMUX configured to perform a de-multiplexing function only. Various components may be implemented as waveguide circuits or free-space optical elements. Alternatively or in addition, similar modifications can be applied to phase modulator **360**. An optical modulator other than a MEMS-based modulator can be used, e.g., a modulator implemented with an array of individual lithium niobate modulator elements, InP waveguide modulator elements, or InP surface normal modulator elements. System 300 can be configured to operate using various QKD protocols, e.g., without limitation, a BB84 protocol, a B92 protocol, or a continuous-variable protocol. Although the invention has been described in reference to phase modulation, one skilled in the art will appreciate that the invention can also be implemented with amplitude modulation or simultaneous modulation of the phase and amplitude. QKD bandwidth resources accessible with optical-frequency comb sources can be flexibly and dynamically allocated to support several different transmitter-receiver arrangements, e.g., (i) one transmitter coupled to one receiver as shown in Fig. 3, (ii) one transmitter coupled to two or more receivers, with the receivers configured to use different subsets of the comb frequencies utilized by the transmitter, (iii) two or more transmitters coupled to a single receiver, with the transmitters configured to use different subsets of the comb frequencies utilized by the receiver, and (iv) multiple transmitters coupled to multiple receivers, with appropriate allocation of the comb frequencies among these transmitters and receivers. OFCS sources different from CEO-phase-controlled mode-locked lasers can be used. Furthermore, certain embodiments of the invention can be implemented with light sources, each adapted to produce a single frequency (wavelength), with that frequency appropriately referenced to a frequency standard. Various frequency standards (e.g., types of atomic clocks) can be used without departing from the scope of the invention. Various modifications of the described embodiments, as well as other embodiments of the invention, which are apparent to persons skilled in the art to which the invention pertains are deemed to lie within the scope of the invention as expressed in the following claims.

For the purposes of this specification, a MEMS device is a device having two or more parts adapted to move relative to one another, where the motion is based on any suitable interaction or combination of interactions, such as mechanical, thermal, electrical, magnetic, optical, and/or chemical interactions. MEMS devices are fabricated using micro- or smaller fabrication techniques (including nano-fabrication techniques) that may include, but are not necessarily limited to: (1) self-assembly techniques employing, e.g., self-assembling monolayers, chemical coatings having high affinity to a desired chemical substance, and production and saturation of dangling chemical bonds and (2) wafer/material processing techniques employing, e.g., lithography, chemical vapor deposition, patterning and selective etching of materials, and treating, shaping, plating, and texturing of surfaces. The scale/size of certain elements in a MEMS device may be such as to permit manifestation of quantum effects. Examples of MEMS devices include, without limitation, NEMS (nano-electromechanical systems) devices, MOEMS (micro-opto-electromechanical systems) devices, micromachines, microsystems, and devices produced using microsystems technology or microsystems integration.

Although the present invention has been described in the context of implementation as MEMS devices, the present invention can in theory be implemented at any scale, including scales larger than micro-scale.

Although the steps in the following method claims, if any, are recited in a particular sequence with corresponding labeling, unless the claim recitations otherwise imply a particular sequence for implementing some or all of those steps, those steps are not necessarily intended to be limited to being implemented in that particular sequence.

**Claims**

1. A communication system (300) for transmission of quantum information, comprising a transmitter (310) coupled to a receiver (350) via a transmission link (390) wherein:

   the transmitter comprises a first optical source (320a) coupled to a first optical modulator (330), wherein the first optical modulator is adapted to modulate light generated by the first optical source to produce a quantum-information QI signal applied to the transmission link; and **characterized in that**
   the receiver comprises a second optical source (320b) coupled to a second optical modulator (360), wherein :

   the second optical modulator is adapted to modulate light generated by the second optical source to produce a local-oscillator LO signal; and
   the LO signal is combined with the QI signal received via the transmission link to ascertain quantum information carried by the QI signal.

2. The invention of claim 1, wherein:

   the LO signal is not transmitted via the transmission link; and
   the receiver is adapted to phase-lock the LO signal to the QI signal.

3. The invention of claim 1, wherein each of the first and second optical sources is referenced to a frequency standard.

4. The invention of claim 1, wherein:

the first optical source comprises a first optical-frequency comb source OFCS adapted to generate a first plurality of uniformly spaced frequency components;
the first optical modulator is adapted to independently modulate each frequency component from the first plurality to encode quantum bits and provide a basis set selection for the transmitter; and
the QI signal comprises at least a subset of the modulated frequency components from the first plurality.

5. The invention of claim 4, wherein:

the second optical source comprises a second OFCS adapted to generate a second plurality of uniformly spaced frequency components;
the second optical modulator is adapted to independently modulate each frequency component from the second plurality to provide a basis set selection for the receiver; and
the LO signal comprises at least a subset of the modulated frequency components from the second plurality.

6. The invention of claim 5, wherein:

the modulated frequency components from the first plurality and the modulated frequency components from the second plurality have a common set of frequencies;
the system comprises an optical coupler adapted to produce first and second interference signals by combining the LO signal with the QI signal; and
the receiver comprises a multi-channel homodyne detector adapted to process the interference signals, wherein:

for each frequency from the common set, the homodyne detector is adapted to measure an intensity difference between the first and second interference signals and apply a measurement result to a signal processor; and
the signal processor is adapted to generate a quantum key based on the measurement results.

7. The invention of claim 6, wherein, for each frequency from the common set, the signal processor is adapted to:

in each time slot, accept or reject a corresponding measurement result based on a comparison of the basis sets selected by the transmitter and the receiver for said time slot; and
compile the quantum key based on the accepted results.

8. The invention of claim 5, wherein each of the first and second optical modulators comprises:

a multiplexer/de-multiplexer MUX/DMUX adapted to de-multiplex the frequency components received from the corresponding OFCS; and
a MEMS array of movable mirrors, wherein:

each mirror in the array is adapted to receive a de-multiplexed frequency component, wherein position of the mirror with respect to a reference position determines a phase shift for said frequency component; and
the MUX/DMUX is further adapted to multiplex the phase-shifted frequency components to produce the corresponding QI or LO signal.

9. A receiver for a communication system for transmission of quantum information, the receiver comprising a second optical source coupled to a second optical modulator, wherein:

the second optical modulator is adapted to modulate light generated by the second optical source to produce a local-oscillator LO signal;
the communication system comprises a transmitter coupled to the receiver via a transmission link;
the transmitter comprises a first optical source coupled to a first optical modulator, wherein the first optical modulator is adapted to modulate light generated by the first optical source to produce a quantum-information QI signal applied to the transmission link; and
the LO signal is combined with the QI signal received via the transmission link by the receiver to ascertain quantum information carried by the QI signal.

**Patentansprüche**

1. Kommunikationssystem (300) zur Übertragung von Quanteninformationen, umfassend einen Sender (310), welcher über eine Übertragungsstrecke (390) an einen Empfänger (350) gekoppelt ist, wobei:

   Der Sender eine erste optische Quelle (320a) umfasst, welche an einen ersten optischen Modulator (330) gekoppelt ist, wobei der erste optische Modulator dazu ausgelegt ist, von der ersten optischen Quelle erzeugtes Licht zu modulieren, um ein Quanteninformations- bzw. QI-Signal zu produzieren, mit welchem die Übertragungsstrecke beaufschlagt wird, und **dadurch gekennzeichnet, dass**
   der Empfänger eine zweite optische Quelle (320b) umfasst, welche an einen zweiten optischen Modulator (360) gekoppelt ist, wobei:

   Der zweite optische Modulator dazu ausgelegt ist, von der zweiten optischen Quelle erzeugtes Licht zu modulieren, um ein Lokaloszillator- bzw. LO-Signal zu produzieren; und
   das LO-Signal mit dem über die Übertragungsstrecke empfangenen QI-Signal kombiniert wird, um von dem QI-Signal transportierte Quanteninformationen zu ermitteln.

2. Erfindung nach Anspruch 1, wobei:

   Das LO-Signal nicht über die Übertragungsstrecke übertragen wird; und
   der Empfänger dazu ausgelegt ist, das LO-Signal mit dem QI-Signal phasenzuverriegeln.

3. Erfindung nach Anspruch 1, wobei sich sowohl die erste als auch die zweite optische Quelle auf einen Frequenzstandard beziehen.

4. Erfindung nach Anspruch 1, wobei:

   Die erste optische Quelle eine erste optische Frequenzkammquelle OFCS umfasst, welche dazu ausgelegt ist, eine erste Mehrzahl von in gleichmäßigen Abständen angeordneten Frequenzkomponenten zu erzeugen;
   der erste optische Modulator dazu ausgelegt ist, jede Frequenzkomponente unabhängig von der ersten Mehrzahl zu modulieren, um Quantenbits zu codieren und eine Grundmengenauswahl für den Sender bereitzustellen; und
   das QI-Signal mindestens eine Teilmenge der modulierten Frequenzkomponenten aus der ersten Mehrzahl umfasst.

5. Erfindung nach Anspruch 4, wobei:

   Die zweite optische Quelle eine zweite OFCS umfasst, welche dazu ausgelegt ist, eine zweite Mehrzahl von in gleichmäßigen Abständen angeordneten Frequenzkomponenten zu erzeugen;
   der zweite optische Modulator dazu ausgelegt ist, jede Frequenzkomponente unabhängig von der zweiten Mehrzahl zu modulieren, um eine Grundmengenauswahl für den Empfänger bereitzustellen; und
   das LO-Signal mindestens eine Teilmenge der modulierten Frequenzkomponenten aus der zweiten Mehrzahl umfasst.

6. Erfindung nach Anspruch 5, wobei:

   Die modulierten Frequenzkomponenten aus der ersten Mehrzahl und die modulierten Frequenzkomponenten aus der zweiten Mehrzahl eine gemeinsame Menge von Frequenzen aufweisen;
   das System einen optischen Koppler umfasst, welcher dazu ausgelegt ist, ein erstes und ein zweites Störsignal zu produzieren, indem er das LO-Signal mit dem QI-Signal kombiniert und
   der Empfänger einen Mehrkanal-Homodyndetektor umfasst, welcher dazu ausgelegt ist, die Störsignale zu verarbeiten, wobei:

   Für jede Frequenz aus der gemeinsamen Menge, der Homodyndetektor dazu ausgelegt ist, eine Intensitätsdifferenz zwischen dem ersten und dem zweiten Störsignal zu messen und ein Messergebnis auf einen Signalprozessor anzuwenden; und
   der Signalprozessor dazu ausgelegt ist, auf der Basis der Messergebnisse einen Quantenschlüssel zu erzeugen.

7. Erfindung nach Anspruch 6, wobei, für jede Frequenz aus der gemeinsamen Menge, der Signalprozessor dazu ausgelegt ist:

   in jedem Zeitschlitz ein entsprechendes Messergebnis auf der Basis eines Vergleichs der von dem Sender und von dem Empfänger für den besagten Zeitschlitz ausgewählten Grundmengen anzunehmen oder abzulehnen; und
   den Quantenschlüssel auf der Basis der angenommenen Ergebnisse zusammenzustellen.

8. Erfindung nach Anspruch 5, wobei sowohl der erste als auch der zweite optische Modulator umfassen:

   Einen Multiplexer/Demultiplexer MUX/DMUX, welcher dazu ausgelegt ist, die von der entsprechenden OFCS empfangenen Frequenzkomponenten zu demultiplexen; und
   eine MEMS-Anordnung von beweglichen Spiegeln, wobei:

   Jeder Spiegel der Anordnung dazu ausgelegt ist, eine demultiplexte Frequenzkomponente zu empfangen, wobei die Position des Spiegels in Bezug auf eine Referenzposition eine Phasenverschiebung für die besagte Frequenzkomponente bestimmt; und
   der MUX/DMUX weiterhin dazu ausgelegt ist, die phasenverschobenen Frequenzkomponenten zu multiplexen, um das entsprechende OI- oder LO-Signal zu produzieren.

9. Empfänger für ein Kommunikationssystem zur Übertragung von Quanteninformationen, wobei der Empfänger eine zweite optische Quelle umfasst, welche an einen zweiten optischen Modulator gekoppelt ist, wobei:

   Der zweite optische Modulator dazu ausgelegt ist, von der zweiten optischen Quelle erzeugtes Licht zu modulieren, um ein Lokaloszillator- bzw. LO-Signal zu produzieren;
   das Kommunikationssystem einen Sender umfasst, welcher über eine Übertragungsstrecke an den Empfänger gekoppelt ist;
   der Sender eine erste optische Quelle umfasst, welche an einen ersten optischen Modulator gekoppelt ist, wobei der erste optische Modulator dazu ausgelegt ist, von der ersten optischen Quelle erzeugtes Licht zu modulieren, um ein Quanteninformations- bzw. QI-Signal zu produzieren, mit welchem die Übertragungsstrecke beaufschlagt wird; und
   das LO-Signal mit dem über die Übertragungsstrecke an dem Empfänger empfangenen QI-Signal kombiniert wird, um von dem QI-Signal transportierte Quanteninformationen zu ermitteln.

## Revendications

1. Système de communication (300) pour transmettre des informations quantiques, comprenant un émetteur (310) connecté à un récepteur (350) par l'intermédiaire d'une liaison de transmission (390), dans lequel :

   l'émetteur comprend une première source optique (320a) connectée à un premier modulateur optique (330), dans lequel le premier modulateur optique est adapté pour moduler la lumière générée par la première source optique pour produire un signal d'informations quantiques QI appliqué à la liaison de transmission ; et **caractérisé en ce que**
   le récepteur comprend une deuxième source optique (320b) connectée à un deuxième modulateur optique (360) dans lequel :

   le deuxième modulateur optique est adapté pour moduler la lumière générée par la deuxième source optique pour produire un signal d'oscillateur local LO ; et
   le signal LO est combiné au signal QI reçu par l'intermédiaire de la liaison de transmission pour identifier des informations quantiques transportées par le signal QI.

2. Invention selon la revendication 1, dans laquelle :

   le signal LO n'est pas transmis par l'intermédiaire de la liaison de transmission ; et
   le récepteur est adapté pour asservir en phase le signal LO au signal QI.

3. Invention selon la revendication 1, dans laquelle chaque source parmi les première et deuxième sources optiques est déterminée selon un étalon de fréquence.

4. Invention selon la revendication 1, dans laquelle :

la première source optique comprend une première source peigne de fréquences optiques OFCS adaptée pour générer une première pluralité de composantes de fréquences uniformément espacées ;
le premier modulateur optique est adapté pour moduler indépendamment chaque composante de fréquence de la première pluralité pour coder des bits quantiques et pour fournir une sélection d'ensembles de base pour l'émetteur ; et
le signal QI comprend au moins un sous-ensemble des composantes de fréquences modulées de la première pluralité.

5. invention selon la revendication 4, dans laquelle :

la deuxième source optique comprend une deuxième OFCS adaptée pour générer une deuxième pluralité de composantes de fréquences uniformément espacées ;
le deuxième modulateur optique est adapté pour moduler indépendamment chaque composante de fréquence de la deuxième pluralité pour fournir une sélection d'ensembles de base pour le récepteur ; et
le signal LO comprend au moins un sous-ensemble des composantes de fréquences modulées de la deuxième pluralité.

6. Invention selon la revendication 5, dans laquelle :

les composantes de fréquences modulées de la première pluralité et les composantes de fréquences modulées de la deuxième pluralité ont un ensemble commun de fréquences ;
le système comprend un coupleur optique adapté pour produire des premier et deuxième signaux d'interférence en combinant le signal LO avec le signal QI ; et
le récepteur comprend un détecteur homodyne multicanal adapté pour traiter les signaux d'interférence, dans laquelle :

pour chaque fréquence de l'ensemble commun, le détecteur homodyne est adapté pour mesurer une différence d'intensité entre les premier et deuxième signaux d'interférence et pour appliquer un résultat de mesure à un processeur de signaux ; et

le processeur de signaux est adapté pour générer une clé quantique sur la base des résultats de mesure.

7. Invention selon la revendication 6, dans laquelle, pour chaque fréquence de l'ensemble commun, le processeur de signaux est adapté pour :

dans chaque créneau temporel, accepter ou rejeter un résultat de mesure correspondant sur la base d'une comparaison des ensembles de base sélectionnés par l'émetteur et le récepteur pour ledit créneau temporel ; et
compiler la clé quantique sur la base des résultats acceptés.

8. Invention selon la revendication 5, dans laquelle chaque modulateur parmi les premier et deuxième modulateurs optiques comprend :

un multiplexeur/démultiplexeur MUX/DMUX adapté pour démultiplexer les composantes de fréquences provenant de l'OFCS correspondante ; et
un réseau MEMS de miroirs mobiles, dans lequel :

chaque miroir dans le réseau est adapté pour recevoir une composante de fréquence démultiplexée, dans laquelle la position du miroir par rapport à une position de référence détermine un déphasage pour ladite composante de fréquence ; et
le MUX/DMUX est en outre adapté pour multiplexer les composantes de fréquences déphasées pour produire le signal QI ou LO correspondant.

9. Récepteur de système de communication pour transmettre des informations quantiques, le récepteur comprenant une deuxième source optique connectée à un deuxième modulateur optique, dans lequel :

le deuxième modulateur optique est adapté pour moduler la lumière générée par la deuxième source optique pour produire un signal d'oscillateur local LO ;

le système de communication comprend un émetteur connecté au récepteur par l'intermédiaire d'une liaison de transmission ;

l'émetteur comprend une première source optique connectée à un premier modulateur optique, dans lequel le premier modulateur optique est adapté pour moduler la lumière générée par la première source optique pour produire un signal d'informations quantiques QI appliqué à la liaison de transmission ; et

le signal LO est combiné au signal QI reçu par l'intermédiaire de la liaison de transmission par le récepteur pour identifier des informations quantiques transportées par le signal QI.

FIG. 1
(prior art)

FIG. 2A

FIG. 2B

FIG. 3

EP 1 882 331 B1

Time domain

$E(t)$

$2\Delta\varphi$

$\Delta\varphi$

401  402  403

$1/f_{rep} = \tau$

$t$

**FIG. 4A**

Frequency domain

$I(f)$

$2\pi\delta = \Delta\varphi\, f_{rep}$

$\delta$

$f_{rep}$

$f_n = n f_{rep} + \delta$

$0$

$f$

**FIG. 4B**

FIG. 5

EP 1 882 331 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6876484 B

### Non-patent literature cited in the description

- **N. GISIN ; G. RIBORDY ; W. TITTEL ; H. ZBINDEN.** Quantum Cryptography. *Reviews of Modern Physics,* 2002, vol. 74, 145-195
- **T. HIRANO et al.** Quantum cryptography using pulsed homodyne detection. *Phys. Rev. A,* 2003, vol. 68, 42331
- **F. GROSSHANS ; P. GRANGIER.** *Phys. Rev. Letters,* 2002, vol. 88 (5), 057902
- **F. GROSSHANS ; P. GRANGIER.** *arXiv:quant-ph/0204127 v1,* 22 April 2002
- **M. A. NIELSEN ; I. L. CHUANG.** Quantum Computation and Quantum Information. Cambridge University Press, 2000, 582-603
- **D.J. JONES et al.** *Science,* 2000, vol. 288, 635
- **R. HOLZWARTH et al.** *IEEE J. Quant. Electron.,* 2001, vol. 37, 1493